# EUROPÄISCHE PATENTSCHRIFT

(11) **EP 4 671 733 B1**
(45) Veröffentlichungstag und Bekanntmachung des Hinweises auf die Patenterteilung: **04.11.2026**
(21) Anmeldenummer: 25183200.2
(22) Anmeldetag: 17.06.2025
(51) Int. Cl.: H01M 10/42, H01M 10/48, H01M 50/609, G01N 21/03, G01N 21/3577, G01N 21/85, G01N 21/05

(54) **MESSVORRICHTUNG, ELEKTROLYT-BEFÜLLUNGSANLAGE UND VERFAHREN ZUR INLINE-ÜBERWACHUNG EINER ELEKTROLYTLÖSUNG**
MEASURING DEVICE, ELECTROLYTE FILLING SYSTEM AND METHOD FOR INLINE MONITORING OF AN ELECTROLYTE SOLUTION
DISPOSITIF DE MESURE, INSTALLATION DE REMPLISSAGE D'ÉLECTROLYTE ET PROCÉDÉ DE SURVEILLANCE EN LIGNE D'UNE SOLUTION ÉLECTROLYTIQUE

(30) Priorität: 17.06.2024 DE 102024116924
(43) Veröffentlichungstag der Anmeldung: 31.12.2025
(73) Patentinhaber: IRPC Infrared - Process Control GmbH, 21079 Hamburg (DE)
(72) Erfinder: Bischof, Robert, 22880 Wedel (DE)
(74) Vertreter: Werner, André

(56) Entgegenhaltungen:
- CN-A- 117 288 711
- US-A1- 2010 221 643
- US-A1- 2022 205 925

## Beschreibung

Die Erfindung betrifft eine Messvorrichtung zur Inline-Überwachung einer Elektrolytlösung, eine Elektrolyt-Befüllungsanlage zur Befüllung von Batteriekörpern mit einer Elektrolytlösung sowie ein Verfahren zur Inline-Überwachung einer Elektrolytlösung bei der Befüllung von Batteriekörpern. Die Technologie eignet sich besonders für den Einsatz in automatisierten Fertigungslinien zur Herstellung von Lithium-Ionen- und Natrium-Ionen-Batterien, bei denen eine hohe Prozesssicherheit und gleichbleibende Elektrolytqualität entscheidend für die Leistungsfähigkeit und Lebensdauer der Batteriezellen sind.

Lithium-Ionen-Batterien (LIB) stellen derzeit den am weitesten verbreiteten Typ wiederaufladbarer Batteriesysteme dar. Der Ladungstransport innerhalb der Batteriezellen erfolgt durch Lithium-Ionen (Li⁺), die zwischen den Elektroden hin- und herwandern. Als Elektrolyt wird in der Regel Lithiumhexafluorophosphat (LiPF₆) eingesetzt, das in organischen Lösungsmitteln, insbesondere Carbonaten wie Dimethylcarbonat (DMC) oder Ethylencarbonat (EC), gelöst ist. Die Stabilität des Elektrolyts ist entscheidend für die Leistungsfähigkeit und Lebensdauer der Batterie. Dabei stellt insbesondere die Empfindlichkeit des Anions PF₆⁻ gegenüber Spuren von Wasser ein zentrales Problem dar: Bereits geringfügige Mengen Feuchtigkeit können zur hydrolytischen Zersetzung führen, wodurch die chemische Integrität des Elektrolyts beeinträchtigt und die elektrochemische Leistung der Batteriezellen reduziert wird.

Ein verwandter Batterietyp ist die Natrium-Ionen-Batterie (SIB), die statt Lithium-Ionen Natrium-Ionen (Na⁺) als Ladungsträger verwendet. Aufbau und Funktionsweise ähneln weitgehend denjenigen von Lithium-Ionen-Batterien, wobei die elektrochemischen Eigenschaften auf den unterschiedlichen Ionentypen beruhen.

Im Herstellungsprozess solcher Batterien wird die Elektrolytlösung in einem definierten Prozessschritt in die jeweiligen Batteriekörper eingefüllt. Um eine hohe Produktqualität sicherzustellen, ist es erforderlich, die eingefüllte Lösung zuvor auf ihre chemische Zusammensetzung und etwaige Verunreinigungen zu überprüfen. Im Stand der Technik erfolgt diese Kontrolle typischerweise offline: Eine Probe der Elektrolytlösung wird aus dem Prozess entnommen und in einem externen Labor analysiert. Dies ist mit mehreren Nachteilen verbunden. Zum einen schreitet die Alterung oder Veränderung der Lösung während der Transport- und Analysezeit weiter fort, wodurch die Aussagekraft des Messergebnisses zum tatsächlichen Befüllzeitpunkt eingeschränkt ist. Zum anderen liegen die Ergebnisse häufig erst verzögert vor, sodass auf deren Grundlage keine unmittelbare Prozessregelung möglich ist. Die elektrochemische Qualität der Batterien kann dadurch negativ beeinflusst werden, wenn sich beispielsweise zwischenzeitlich unerkannt Verunreinigungen gebildet haben.

Ein weiterer kritischer Punkt im praktischen Betrieb von Elektrolyt-Befüllungsanlagen ist die Notwendigkeit regelmäßiger Reinigungsvorgänge. Nach solchen Reinigungsschritten muss sichergestellt werden, dass keine Rückstände der Reinigungsflüssigkeit in die nachfolgend eingefüllte Elektrolytlösung übergehen. Um dieses Risiko zu minimieren, wird die Anlage nach der Reinigung üblicherweise mit einer definierten Menge an Elektrolytlösung vorgespült. Diese Vorlaufmenge gilt als potenziell kontaminiert und wird vorsorglich verworfen. Um die Qualitätssicherheit zu gewährleisten, wird dieser Verlust oft großzügig bemessen. Dies führt zu einem erhöhten Verbrauch an Elektrolytmaterial und verursacht sowohl zusätzliche Materialkosten als auch einen Entsorgungsaufwand für nicht verwendbare Lösung.

Aus der US 2022/0205925 A1 ist ein Durchflusszellensystem zur optischen Analyse von Flüssigkeiten bekannt, das insbesondere zur Verwendung mit Bioreaktoren vorgesehen ist. Die Flüssigkeit wird dabei durch eine, vorzugsweise austauschbare bzw. disposable, Durchflusszelle geleitet, welche eine Strömungskammer mit optisch transparenten Fenstern aufweist. Über optische Kopplungen, Lichtquellen und Detektionseinrichtungen können optische Messungen an der durchströmenden Flüssigkeit durchgeführt werden, wobei unter anderem Absorptions-, Streu-, Fluoreszenz-, Transmissions- und spektroskopische Messungen genannt sind.

US 2010/0221643 A1 offenbart ein Brennstoffzellensystem, bei dem Hydrazin als Brennstoff verwendet wird und eine in einem Brennstoffzuführpfad angeordnete Fixiereinheit dazu dient, Hydrazin aus einer wässrigen Hydrazinlösung zu entfernen beziehungsweise zu binden. Das System weist Sensoreinrichtungen auf, mit denen die Hydrazinkonzentration in der Flüssigkeit vor und/oder nach der Fixiereinheit erfasst wird, wobei eine Steuereinheit auf Grundlage der erfassten Konzentration den Flüssigkeitsfluss steuert und insbesondere zwischen einem Rückführpfad, einem Zuführpfad zur Brennstoffzelle und einem Ablasspfad umschalten kann.

CN 117288711 A beschreibt eine Vorrichtung und ein Verfahren zur Leckageüberwachung einer Traktionsbatterie. Die Vorrichtung weist eine Gaskammer, eine Infrarotlichtquelle, einen Mehrkanaldetektor und eine Steuerschaltung auf, wobei ein erster Messkanal zur Erfassung von Elektrolyt-Verdampfungsgasen, ein zweiter Messkanal zur Erfassung von Störgasen und ein Referenzkanal vorgesehen sind.

Aufgabe der Erfindung ist es, die Überwachung der Zusammensetzung und Qualität von Elektrolytlösungen im Rahmen der Herstellung von wiederaufladbaren Batterien zu verbessern. Dabei soll insbesondere eine zuverlässige und zeitnahe Analyse der relevanten Inhaltsstoffe sowie möglicher Verunreinigungen der Elektrolytlösung ermöglicht werden, um die Prozesssicherheit während der Befüllung von Batteriekörpern der Batteriezellen zu erhöhen. Weiterhin besteht die Aufgabe darin, die Auswirkungen von Reinigungs- und Spülvorgängen in Elektrolyt-Befüllungsanlagen kontrollierbar zu machen und Materialverluste durch unnötige Verwerfung von Elektrolytlösung zu reduzieren. Darüber hinaus soll eine Grundlage geschaffen werden, um die Qualität der Batteriezellen durch eine präzise und kontinuierliche Kontrolle der eingesetzten Elektrolytlösung abzusichern und den Produktionsprozess effizienter zu gestalten.

Diese Aufgabe wird durch eine Messvorrichtung zur Inline-Überwachung einer Elektrolytlösung mit den Merkmalen nach Anspruch 1, eine Elektrolyt-Befüllungsanlage nach Anspruch 10 und ein Verfahren zur Inline-Überwachung einer Elektrolytlösung nach Anspruch 11 gelöst. Zweckmäßige Weiterbildungen der Erfindung sind in den Ansprüchen 2 bis 9 sowie 12 aufgeführt.

Nach Maßgabe der Erfindung umfasst die Messvorrichtung zur Inline-Überwachung einer Elektrolytlösung eine Durchflusszelle zur Durchleitung der Elektrolytlösung sowie ein an die Durchflusszelle gekoppeltes, mit der Elektrolytlösung interagierendes IR-Spektrometer (Infrarot-Spektrometer) zur spektroskopischen Analyse der Elektrolytlösung, d. h., das IR-Spektrometer ist in geeigneter Weise an der Durchflusszelle angebracht, sodass die durchgeleitete Elektrolytlösung das IR-Spektrometer wechselwirkend passieren kann. Das IR-Spektrometer kann sowohl für die Transmissions-Spektroskopie, d. h. als Transmissionsspektrometer, als auch für die ATR-Spektroskopie (Attenuated Total Reflection) ausgebildet sein. Die Durchflusszelle ist beispielsweise ein IR-transparentes Rohrstück oder eine Durchflussküvette.

Das IR-Spektrometer weist erfindungsgemäß mehrere IR-Emitter (Infrarot-Emitter), mindestens einen IR-Detektor (Infrarot-Detektor) mit mehreren Detektionsbereichen sowie eine Steuereinheit zur Einzelleistungssteuerung der IR-Emitter auf. Die IR-Emitter sind vorzugsweise in Reihe gegenüber dem IR-Detektor angeordnet. Insbesondere handelt es sich um nanostrukturierte IR-Emitter.

Die IR-Emitter emittieren Strahlung im mittleren Infrarotbereich (MIR-Strahlung). Die dabei abgegebene MIR-Strahlung ist nicht zwingend monochromatisch, sondern umfasst typischerweise ein breites Emissionsspektrum an Wellenlängen, das durch das Material und die Bauart des IR-Emitters bestimmt wird. Die sogenannte Emissionswellenlänge bezeichnet in diesem Zusammenhang die Wellenlänge, bei der die Strahlungsintensität innerhalb des Emissionsspektrums ihr Maximum erreicht. Sie dient somit als charakteristischer Parameter zur Beschreibung des Emissionsverhaltens, ohne dabei auszudrücken, dass ausschließlich bei dieser Wellenlänge Strahlung emittiert wird. Vielmehr steht die Emissionswellenlänge stellvertretend für das gesamte Emissionsspektrum des IR-Emitters und ermöglicht eine vereinfachte Angabe seines spektralen Wirkungsbereichs.

Erfindungsgemäß ist jedem der IR-Emitter jeweils ein separater Detektionsbereich des IR-Detektors zugeordnet, wobei der jeweilige IR-Emitter und der ihm zugeordnete Detektionsbereich des IR-Detektors jeweils einen Messpfad des IR-Spektrometers bilden. Der IR-Detektor ist dabei ausgebildet, für jeden Messpfad MIR-Strahlung in einem detektionsbereichsspezifischen Wellenzahlintervall zu detektieren, wobei sich die detektionsbereichsspezifischen Wellenzahlintervalle der unterschiedlichen Messpfade voneinander unterscheiden. Unter MIR-Strahlung, d. h. Strahlung im mittleren Infrarot, wird vorliegend ein Wellenzahlenbereich von 4000 cm⁻¹ bis 400 cm⁻¹ verstanden. Die IR-Emitter können zum Beispiel thermische Emitter und/oder Mittelinfrarot-Leuchtdioden (MIR-LEDs) sein, wobei die IR-Emitter je nach konstruktiver Ausführung des IR-Spektrometers MIR-Strahlung mit gleicher oder unterschiedlicher Emissionswellenlänge emittieren können. Die bevorzugte Emissionswellenlänge der IR-Emitter liegt im Wellenlängenbereich von 2,5 µm bis 5 µm.

Die Leistung jedes der IR-Emitter ist mittels der Steuereinheit in Abhängigkeit des dem jeweiligen Messpfad zugeordneten detektionsbereichsspezifischen Wellenzahlintervalls zur Anpassung der Strahlungsintensität im jeweiligen Messpfad individuell steuerbar und/oder modulierbar. Darüber hinaus ist die Steuereinheit eingerichtet, die Leistung des jeweiligen IR-Emitters so zu steuern, dass die Strahlungsintensität im jeweiligen Messpfad in einem Intensitätsarbeitsbereich liegt, der oberhalb des Signalrauschpegels und unterhalb des Sättigungslimits des IR-Detektors im jeweiligen detektionsbereichsspezifischen Wellenzahlintervall liegt.

Unter dem Begriff "Intensitätsarbeitsbereich" wird vorliegend derjenige Bereich der Strahlungsintensität verstanden, in dem der IR-Detektor ein zuverlässiges, reproduzierbares und quantitativ auswertbares Signal liefert. Dieser Bereich ist dadurch charakterisiert, dass die Strahlungsintensität einerseits oberhalb des Signalrauschpegels liegt, sodass die detektierte Strahlung signifikant vom IR-Detektor erfasst werden kann, und andererseits unterhalb eines Sättigungslimits bleibt, bei dem der IR-Detektor nicht mehr linear oder korrekt auf eine zunehmende Strahlungsintensität reagiert. Innerhalb dieses Bereichs ist die Detektorausgabe funktional nutzbar, unabhängig davon, ob sie streng linear zum Eingangssignal verläuft. Der Intensitätsarbeitsbereich kann daher auch nichtlineare, aber kalibrierbare Signalbereiche umfassen, sofern diese einer quantitativen Auswertung zugänglich sind. Üblicherweise liegt im Intensitätsarbeitsbereich ein linearer Zusammenhang vor, sodass dieser Bereich im Regelfall als linearer Arbeitsbereich des IR-Detektors bezeichnet wird.

Die Erfassung eines Infrarotspektrums erfolgt bei Anwendung der Messvorrichtung mittels des an die Durchflusszelle gekoppelten IR-Spektrometers. Die Elektrolytlösung wird durch die Durchflusszelle geleitet, während gleichzeitig Infrarotstrahlung durch die Elektrolytlösung hindurchgeführt wird. Dabei entsteht ein Transmissionsspektrum, das Informationen über die spektrale Absorption verschiedener Moleküle innerhalb der Elektrolytlösung enthält.

Die MIR-Strahlung von den IR-Emittern durchdringt die Elektrolytlösung entlang der definierten Messpfade, die jeweils durch die räumliche Zuordnung eines der IR-Emitter zu einem der Detektionsbereiche des IR-Detektors entstehen.

Während die MIR-Strahlung durch die Elektrolytlösung geführt wird, kommt es zu einer Absorption bestimmter Wellenzahlen durch die in der Elektrolytlösung enthaltenen Moleküle. Diese Absorption ist charakteristisch für bestimmte chemische Bindungen und funktionelle Gruppen. Die Höhe und Position der Absorptionsbanden im resultierenden Spektrum hängen somit direkt von der Art und Konzentration der vorhandenen chemischen Spezies ab.

Die nach Durchtritt durch die Elektrolytlösung verbleibende MIR-Strahlung trifft auf den IR-Detektor. In jedem Detektionsbereich erfasst der IR-Detektor die MIR-Strahlung in dem dem Messpfad und damit dem Detektionsbereich zugeordneten detektionsbereichsspezifischen Wellenzahlintervall.

Der IR-Detektor wandelt die eintreffende MIR-Strahlung in ein elektrisches Signal um, dessen Strahlungsintensität der nicht absorbierten MIR-Strahlung entspricht. Durch Vergleich der Strahlungsintensität der ausgesandten und detektierten MIR-Strahlung kann für jeden Messpfad der Absorptionsgrad ermittelt werden. Die Gesamtheit dieser Messdaten über alle Messpfade hinweg ergibt das gemessene Infrarotspektrum der Elektrolytlösung.

Die erfindungsgemäße Messvorrichtung zur Inline-Überwachung ermöglicht eine kontinuierliche und zerstörungsfreie Echtzeitüberwachung. Sie erlaubt es, die chemische Zusammensetzung der Elektrolytlösung direkt im Prozess - beispielsweise während der Befüllung von Batteriekörpern - zu erfassen, ohne auf verzögerte Laboranalysen angewiesen zu sein.

Ein wesentliches Merkmal der Messvorrichtung besteht darin, dass jeweils ein IR-Emitter einem separaten Detektionsbereich des IR-Detektors fest zugeordnet ist, sodass eindeutig definierte Messpfade entstehen. Diese klare strukturelle Trennung erlaubt eine gezielte spektrale Erfassung einzelner Wellenzahlbereiche, die jeweils auf spezifische Komponenten der Elektrolytlösung abgestimmt sein können. Durch die Verwendung mehrerer solcher Messpfade lassen sich unterschiedliche Bestandteile - wie Lösungsmittel, Leitsalze oder Spuren von Wasser - gleichzeitig und unabhängig voneinander analysieren.

Infrarotlichtquellen weisen typischerweise eine wellenzahlabhängige Strahlungsintensität auf, die über das Spektrum hinweg variiert. Zusätzlich zeigen die verwendeten optischen Komponenten eine spektrale Transmission, die ebenfalls von der Wellenlänge abhängig ist. Dadurch werden bestimmte Wellenzahlbereiche effizienter durchgelassen als andere, was zur Folge haben kann, dass die einzelnen Detektionsbereiche des IR-Detektors unterschiedlich stark ausgeleuchtet sind. Dies führt zu einer unausgeglichenen spektralen Signalverteilung am IR-Detektor.

In der Praxis nimmt die Strahlungsintensität der MIR-Strahlung bei kleineren Wellenzahlen in der Regel ab, sodass diese spektralen Bereiche mit geringerer Energie auf den IR-Detektor treffen. Befindet sich die Strahlungsintensität in einem Bereich nahe der unteren oder oberen Empfindlichkeitsgrenze des IR-Detektors, verlässt das Signal den Intensitätsarbeitsbereich bzw. den linearen Arbeitsbereich. In diesem Fall ist eine quantitative Auswertung der Messdaten nicht mehr zuverlässig möglich. Eine pauschale Erhöhung der Strahlungsintensität zur Verstärkung schwacher Signale ist gemeinhin nicht zielführend, da dies in anderen, bereits gut ausgeleuchteten Bereichen zur Überschreitung des Sättigungslimits führen kann. Eine solche Sättigung führt zu Signalverzerrung oder Signalverlust, wodurch die Messung ebenfalls unbrauchbar wird.

Ein besonderer Vorteil der erfindungsgemäßen Messvorrichtung ergibt sich insofern aus der Möglichkeit, die Leistung jedes einzelnen IR-Emitters individuell zu steuern und/oder zu modulieren. Die Steuerung erfolgt in Abhängigkeit vom jeweils zugeordneten detektionsbereichsspezifischen Wellenzahlintervall, wodurch die Strahlungsintensität gezielt angepasst werden kann, um die jeweiligen Detektionsbereiche mit einer individuell abstimmbaren Strahlungsintensität auszuleuchten. Dies gewährleistet, dass die in jedem Messpfad erzeugte MIR-Strahlung so dosiert ist, dass sie innerhalb des Intensitätsarbeitsbereichs liegt, in dem der IR-Detektor zuverlässig arbeiten kann - also oberhalb des Signalrauschpegels, aber unterhalb seines Sättigungslimits. Damit wird in jedem Messpfad eine optimale Signalqualität erzielt, ohne dass es zu Übersteuerung oder Messunsicherheit durch zu schwache Signale kommt. Durch die individuell angepasste Ansteuerung der einzelnen IR-Emitter mittels der Steuereinheit kann mithin eine gleichmäßigere detektorseitige Intensitätsverteilung realisiert werden.

Die Messvorrichtung eignet sich insbesondere für den Einsatz in automatisierten Fertigungsumgebungen, in denen hohe Anforderungen an Prozesssicherheit, Messgeschwindigkeit und Reproduzierbarkeit gestellt werden. Die Vorrichtung trägt dazu bei, Qualitätsschwankungen zu minimieren, Materialverluste zu reduzieren und kritische Parameter wie Wassergehalt oder Elektrolytzusammensetzung frühzeitig und zuverlässig zu erfassen. Dies ermöglicht nicht nur eine präzisere Prozesskontrolle, sondern auch eine signifikante Steigerung der Effizienz und Sicherheit in der Batterieproduktion.

Die erfindungsgemäße, prozessintegrierbare Messvorrichtung ist insbesondere zur Echtzeit-Inline-Analyse von Lithium- oder Natrium-Ionen-Elektrolytlösungen geeignet, sowohl hinsichtlich ihrer Zusammensetzung als auch im Hinblick auf mögliche Stör- und Fremdstoffe.

Die vorgeschlagene Messtechnologie ermöglicht eine dokumentierte Qualitätsüberwachung von Elektrolytlösungen - etwa bei Lithium-Ionen-Elektrolyten - und erhöht durch die kontinuierliche Unterscheidung von in Ordnung (IO) und nicht in Ordnung (NIO) befindlichen Elektrolytlösungen die Transparenz im Herstellungsprozess von Batteriezellen. Durch die kontinuierliche Messung lassen sich zudem verlässliche Langzeitbeobachtungen zu den eingesetzten Elektrolyten durchführen. Darüber hinaus kann der Elektrolyteinsatz effizienter gestaltet werden, da die Einhaltung der Qualitätsanforderungen nach Reinigungsprozessen in der Elektrolyt-Befüllungsanlage unmittelbar und in Echtzeit überprüft werden kann.

Die Messvorrichtung ist insofern insbesondere Teil der erfindungsgemäßen Elektrolyt-Befüllungsanlage zur Befüllung von Batteriekörpern mit einer Elektrolytlösung, wobei die Messvorrichtung in eine Leitung integriert ist, durch die die Elektrolytlösung einer Befüllstelle zur Befüllung der Batteriekörper zugeführt wird. Die Messvorrichtung ist hierbei vorzugsweise in der Leitung unmittelbar vor der Befüllstelle in die Elektrolyt-Befüllungsanlage integriert.

Das erfindungsgemäße Verfahren zur Inline-Überwachung einer Elektrolytlösung bei der Befüllung von Batteriekörpern erfolgt mittels der vorstehend beschriebenen Elektrolyt-Befüllungsanlage: Die Elektrolytlösung wird durch die Durchflusszelle der Messvorrichtung geleitet und mittels des IR-Spektrometers der Messvorrichtung spektroskopisch analysiert. Dabei wird in jedem Messpfad MIR-Strahlung durch einen der IR-Emitter emittiert und von einem zugeordneten Detektionsbereich des IR-Detektors detektiert. Die Leistung jedes der IR-Emitter wird mittels der Steuereinheit in Abhängigkeit des jeweiligen detektionsbereichsspezifischen Wellenzahlintervalls individuell so gesteuert, dass die Strahlungsintensität im jeweiligen Messpfad in einem Intensitätsarbeitsbereich liegt, der oberhalb des Signalrauschpegels und unterhalb des Sättigungslimits des IR-Detektors im jeweiligen detektionsbereichsspezifischen Wellenzahlintervall, insbesondere im linearen Arbeitsbereich, liegt. Aus einem durch das IR-Spektrometer über alle Messpfade hinweg erfassten Infrarotspektrum werden die in der Elektrolytlösung enthaltenen Stoffe sowie deren Stoffmengenkonzentration bestimmt, indem das erfasste Infrarotspektrum mit Referenzinfrarotspektren von Elektrolytlösungen mit bekannter Zusammensetzung und bekannter Stoffmengenkonzentration verglichen wird.

Die Messvorrichtung eignet sich - neben dem vorstehend beschriebenen Einsatzszenario in der Elektrolyt-Befüllungsanlage - darüber hinaus auch für die Einzelbeprobung und kann als infrarotspektroskopisches Schnellanalysesystem eingesetzt werden.

Gemäß einer Ausgestaltung der Erfindung ist der IR-Detektor bzw. mindestens einer der IR-Detektoren als pyroelektrischer Zeilendetektor (Pyro-Array-Detektor) ausgebildet. Dabei liegt das detektionsbereichsspezifische Wellenzahlintervall eines der Detektionsbereiche im Bereich von 4000 cm⁻¹ bis 2000 cm⁻¹. Einem weiteren der Messpfade ist ein weiterer Detektionsbereich dieses IR-Detektors zugeordnet, dessen detektionsbereichsspezifisches Wellenzahlintervall im Bereich von 1800 cm⁻¹ bis 900 cm⁻¹ liegt. Im detektionsbereichsspezifischen Wellenzahlintervall von 4000 cm⁻¹ bis 2000 cm⁻¹ lässt sich Wasser sehr gut detektieren, aber auch die Kohlensäureester lassen sich dort gut erfassen. Das detektionsbereichsspezifische Wellenzahlintervall von 1800 cm⁻¹ bis 900 cm⁻¹ entspricht dem in der Infrarotspektroskopie als Fingerprint-Bereich bezeichneten Bereich, da hier komplexe und molekülspezifische Absorptionsbanden auftreten. Die deutlichsten Absorptionsbanden des in den für die Batteriebefüllung vielfach genutzten Elektrolytlösungen enthaltenen Hexafluorophosphat-Ions (PF₆⁻) erscheinen beispielsweise bei circa 1750 cm⁻¹, 1500 cm⁻¹, 1300 cm⁻¹ und 850 cm⁻¹, sodass der Detektionsbereich, in dem der IR-Detektor im detektionsbereichsspezifischen Wellenzahlintervall von 1800 cm⁻¹ bis 900 cm⁻¹ drei dieser Absorptionsbanden erfasst.

Die üblichen Lösungsmittel, d. h. Dimethylcarbonat (DMC), Ethylencarbonat, Ethylmethylcarbonat (EMC) und Propylencarbonat (PC), können sowohl im Wellenzahlintervall von 4000 cm⁻¹ bis 2000 cm⁻¹ als auch im Wellenzahlintervall von 1800 cm⁻¹ bis 900 cm⁻¹ gut erfasst und unterschieden werden.

Es kann weiterhin vorgesehen sein, dass das IR-Spektrometer mehrere der IR-Detektoren aufweist, wobei mindestens einer der IR-Detektoren als diskreter Sensor ausgebildet ist. Das detektionsbereichsspezifische Wellenzahlintervall des als diskreter Sensor ausgebildeten IR-Detektors liegt in dem diesem zugeordneten Messpfad vorzugsweise bei 850 cm⁻¹ ± 25 cm⁻¹. Dies ermöglicht es, Hexafluorophosphat-Anionen und ggf. deren in Spuren vorkommende Abbauprodukte noch genauer zu bestimmen, da das Hexafluorophosphat-Ion (PF₆⁻) eine Absorptionsbande bei circa 850 cm⁻¹ aufweist.

Gemäß einer Ausgestaltung der Erfindung ist der IR-Detektor mit einem oder mehreren spektralselektiven Filterelementen ausgestattet. Dabei ist das oder sind die Filterelemente so ausgebildet, dass der IR-Detektor für jeden Messpfad die MIR-Strahlung ausschließlich in dem diesem Messpfad zugewiesenen detektionsbereichsspezifischen Wellenzahlintervall detektiert. Das Filterelement kann zum Beispiel ein linear variabler Filter (LVF) sein.

So kann der als pyroelektrischer Zeilendetektor ausgebildete IR-Detektor das oder die Filterelemente, insbesondere in der Ausbildung als linear variabler Filter (LVF), umfassen, die in den einzelnen Detektionsbereichen des IR-Detektors eine unterschiedliche Filterung der MIR-Strahlung in Bezug auf die Wellenlänge bzw. Wellenzahl bewirken. Durch die detektionsbereichsspezifische Filterung erfasst der IR-Detektor in den verschiedenen Detektionsbereichen, die sich im Fall des pyroelektrischen Zeilendetektors in Form von Pixeln oder Pixelgruppen repräsentieren, jeweils nur im detektionsbereichsspezifischen Wellenzahlintervall.

Die als diskrete Sensoren ausgeführten IR-Detektoren können beispielsweise Einzeldetektoren mit integrierten Schmalbandfiltern sein. Die Filterwellenlänge des jeweiligen Schmalbandfilters ist dabei gezielt auf eine bestimmte, in der Elektrolytlösung nachzuweisende Komponente abgestimmt. Solche diskreten Sensoren ermöglichen in der Regel eine empfindlichere Detektion als ein pyroelektrischer Zeilendetektor mit linear variablem Filter (LVF), insbesondere bei geringen Konzentrationen der Zielsubstanz. Dies liegt unter anderem daran, dass diskrete Sensoren üblicherweise über eine größere aktive Sensorfläche verfügen und somit auch bei geringerer einfallender Strahlungsintensität ein ausreichendes Signal erzeugen. Die resultierende höhere Strahlungsausbeute führt zu einem verbesserten Signal-Rausch-Verhältnis und ermöglicht eine präzisere quantitative Analyse.

Bei Anwendung von unterschiedlich filternden Filterelementen können die IR-Emitter grundsätzlich identisch sein, d. h., die IR-Emitter können so ausgebildet sein, dass sie MIR-Strahlung mit identischer Emissionswellenlänge emittieren.

Gemäß einer weiteren Ausgestaltung der Erfindung emittieren die IR-Emitter MIR-Strahlung in unterschiedlichen emitterspezifischen Wellenzahlintervallen, wobei für jeden Messpfad das emitterspezifische Wellenzahlintervall jeweils mit dem zugehörigen detektionsbereichsspezifischen Wellenzahlintervall korrespondiert. D. h., die IR-Emitter emittieren MIR-Strahlung mit unterschiedlichen Emissionswellenlängen. Hierdurch ist die wellenzahlspezifische Detektion des IR-Detektors entsprechend des dem jeweiligen Messpfad zugeordneten detektionsbereichsspezifischen Wellenzahlintervalls auch ohne Filterung realisierbar.

Die einzelnen Messpfade des IR-Spektrometers können durch ein oder mehrere Abschirmelemente optisch voneinander getrennt sein. Durch die optische Trennung der Messpfade wird verhindert, dass sich MIR-Strahlung benachbarter IR-Emitter überlagert oder ungewollt in andere Detektionsbereiche gelangt. Dies reduziert Streustrahlung und optische Kreuzinterferenzen zwischen den einzelnen Messpfaden und verbessert dadurch die spektrale Selektivität und Messgenauigkeit. Jeder Messpfad bleibt hinsichtlich seiner spektralen Signale eindeutig zuordenbar, was insbesondere bei paralleler Detektion mehrerer Komponenten mit überlappenden Wellenzahlintervallen entscheidend für die zuverlässige Auswertung ist. Die Abschirmelemente tragen somit zur Erhöhung der Signalqualität, zur Verbesserung des Signal-Rausch-Verhältnisses und zur minimierten Fehlzuordnung von Signalen im Mehrkanalbetrieb bei.

Die IR-Emitter sind vorzugsweise Mittelinfrarot-Leuchtdioden (MIR-LEDs), die zum Beispiel auf einer Infrarot-LED-Leiste angeordnet sind. Einer der Vorteile von Mittelinfrarot-Leuchtdioden (MIR-LEDs) besteht in ihrer Fähigkeit zur sehr schnellen Modulation. Dadurch ist es möglich, innerhalb kurzer Zeit eine große Anzahl an Einzelmessungen durchzuführen. Die schnelle Taktung erlaubt es, mehrere Infrarotspektren unmittelbar nacheinander aufzunehmen und diese rechnerisch zu mitteln. Durch diese Mittelung wird das zufällige Signalrauschen deutlich reduziert, während das Nutzsignal erhalten bleibt. Das resultierende verbesserte Signal-Rausch-Verhältnis führt zu einer erhöhten Empfindlichkeit des Gesamtsystems. Insbesondere für den Nachweis von Substanzen, die nur in sehr geringen Konzentrationen vorliegen - wie etwa Spuren von Wasser in der Elektrolytlösung - ermöglicht dieser Effekt eine Verschiebung der Nachweisgrenze zu noch niedrigeren Konzentrationen, was die Leistungsfähigkeit der Messvorrichtung erheblich steigert.

Die Messvorrichtung kann ferner eine Datenverarbeitungseinheit aufweisen oder an eine solche angekoppelt sein. Die Datenverarbeitungseinheit ist zur Verarbeitung der mittels des IR-Spektrometers erfassten Infrarotspektren, zur Datenspeicherung der erfassten Infrarotspektren sowie von Referenzinfrarotspektren und zur spektralanalytischen Auswertung der durch das IR-Spektrometer gewonnenen Daten eingerichtet.

Zur Durchführung der spektralanalytischen Auswertung kann die Datenverarbeitungseinheit ein auf Referenzinfrarotspektren trainiertes chemometrisches Modell auf Basis eines künstlichen neuronalen Netzes umfassen. Insbesondere kann das chemometrische Modell ein auf Machine-Learning-Algorithmen (ML) beruhendes neuronales Netz sein, das anhand von IR-Messdaten in Kombination mit Referenzanalysen von Elektrolytlösungsproben trainiert wurde. Die Analyseergebnisse aus bekannten Proben werden dabei mit den zugehörigen Infrarotspektren verknüpft und zur Optimierung des Modells genutzt. Diese datenbasierte Auswertung ermöglicht es, aus einem erfassten Infrarotspektrum den Gehalt einer bestimmten Komponente der Elektrolytlösung, beispielsweise den Li-Ionen-Gehalt, durch Abgleich mit gespeicherten Referenzinfrarotspektren zuverlässig zu bestimmen.

Gemäß einer Ausgestaltung der Erfindung ist das IR-Spektrometer als Transmissionsspektrometer ausgebildet, wobei die Durchflusszelle als Durchflussküvette mit einer festen oder variabel einstellbaren Schichtdicke ausgestaltet ist. Die Durchflussküvette weist hierbei mindestens zwei einander gegenüberliegende IR-transparente Fenster (Kristalle) auf, zwischen denen die Elektrolytlösung die Durchflusszelle durchströmt.

In einer bevorzugten Ausführung besitzt die Durchflussküvette eine variable Schichtdicke, die beispielsweise mechanisch oder piezoelektrisch einstellbar ist. Die Schichtdickeneinstellung erfolgt durch die beiden relativ zueinander beweglichen IR-transparenten Fenster (Kristalle), zwischen denen die Elektrolytlösung hindurchgeleitet wird. Die Bewegung dieser IR-transparenten Fenster (Kristalle) kann automatisiert erfolgen und ermöglicht eine präzise Anpassung der effektiven Schichtdicke an die spektralanalytischen Anforderungen. Die einstellbare Schichtdicke dient dazu, eine geeignete Absorption der MIR-Strahlung während der Transmissionsmessung sicherzustellen: Einerseits muss ausreichend Signal absorbiert werden, um eine differenzierbare Detektion zu ermöglichen; andererseits darf die Absorption nicht so stark ausfallen, dass das Signal vollständig ausgelöscht wird, da in diesem Fall keine quantitative Auswertung mehr möglich wäre. Die zu wählende Schichtdicke richtet sich nach der Konzentration der zu detektierenden Komponenten in der Elektrolytlösung. Für die Detektion von Komponenten, die nur in Spuren vorliegen - wie beispielsweise Wasser -, ist eine größere Schichtdicke einzustellen. Für in hoher Konzentration enthaltene Bestandteile, wie etwa das Hexafluorophosphat-Ion, sind dagegen kleinere Schichtdicken einzustellen, um eine Überabsorption zu vermeiden.

Die als Durchflussküvette ausgebildete Durchflusszelle ist insbesondere für den Einsatz unter hohen Drücken konzipiert und daher entsprechend druckdicht ausgeführt, um den Anforderungen der Inline-Überwachung während der Elektrolytbefüllung gerecht zu werden.

Die Erfindung ist nachfolgend anhand von Ausführungsbeispielen und mit Bezug auf die schematischen Zeichnungen näher erläutert, wobei gleiche oder ähnliche Merkmale mit gleichen Bezugszeichen versehen sind; dazu zeigen:
- Fig. 1:: eine Ausführung der Elektrolyt-Befüllungsanlage mit der Messvorrichtung im Längsschnitt,
- Fig. 2:: Infrarot- und Referenzinfrarotspektren von Elektrolytlösungen und deren Komponenten,
- Fig. 3:: eine erste Ausführung der Messvorrichtung im Längsschnitt und
- Fig. 4:: eine zweite Ausführung der Messvorrichtung im Längsschnitt.

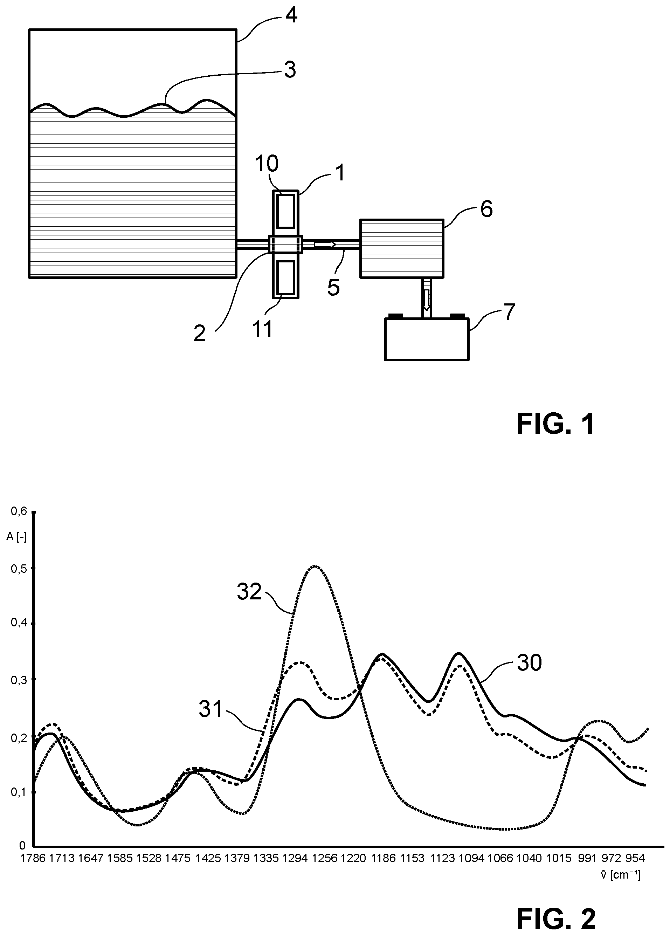

Die Elektrolyt-Befüllungsanlage gemäß der vereinfachten Darstellung nach Fig. 1 umfasst den Vorlagebehälter 4, in dem sich die Elektrolytlösung 3 befindet. Aus diesem wird sie zur Befüllung des Batteriekörpers 7 entnommen, wobei sie über die Leitung 5 in die Dosiereinrichtung 6 geführt und mittels der Dosiereinrichtung 6, die hier die Befüllstelle darstellt, in einer vordefinierten Menge in den Batteriekörper 7 eingeleitet wird.

Die Messvorrichtung ist in die Leitung 5 zwischen dem Vorlagebehälter 4 und der Dosiereinrichtung 6 integriert. Die Durchflusszelle 2 kann ein Teilstück der Leitung 5 sein; sie kann auch als Bypass zur Leitung 5 ausgebildet sein. Das IR-Spektrometer 1 ist so an der Durchflusszelle 2 angebracht, dass während der Durchleitung der Elektrolytlösung 3 die von den IR-Emittern 10 emittierte MIR-Strahlung mit der Elektrolytlösung 3 wechselwirkt und danach vom IR-Detektor 11 erfasst wird.

Die Fig. 2 zeigt beispielhaft die Funktionalität der IR-Spektroskopie bei Anwendung auf Elektrolytlösungen 3 zur Konzentrationsbestimmung. Aus den drei, den funktionalen Zusammenhang zwischen Absorbanz A und Wellenzahl ṽ darstellenden Spektren, nämlich einem Infrarotspektrum 30 einer abfüllfertigen Li-Ionen-Elektrolytlösung, einem Referenzinfrarotspektrum 31 einer Testmischung der gleichen Li-Ionen-Elektrolytlösung und Dimethylcarbonat (DMC) und einem Referenzinfrarotspektrum 32 des Lösungsmittels Dimethylcarbonat (DMC), ist ersichtlich, in welchen Spektralbereichen eine Bestimmung des Li-Ionen-Gehalts vorzugsweise erfolgen kann.

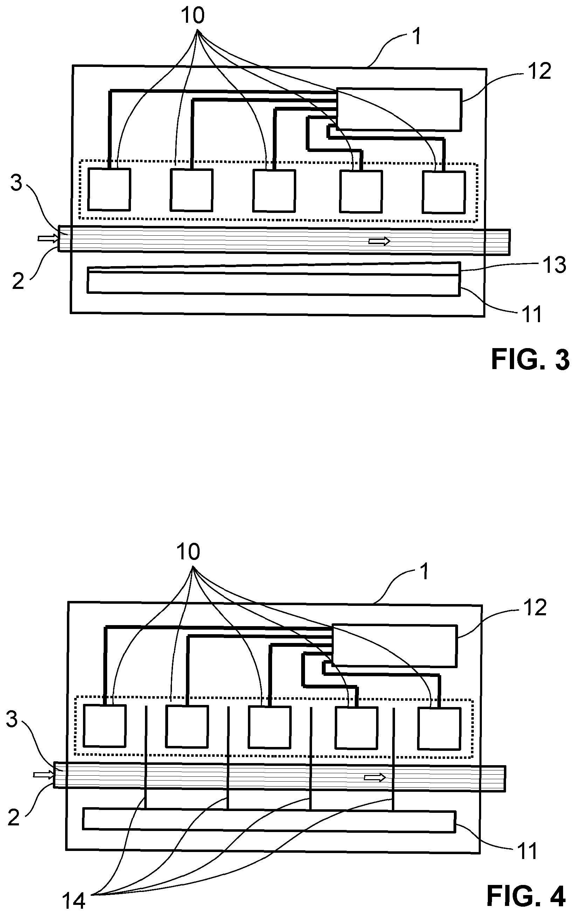

Die Fig. 3 und die Fig. 4 beschreiben verschiedene Ausführungen der Messvorrichtung. Das IR-Spektrometer 1 umfasst in beiden Beispielen den als Zeilendetektor (mit 128 Pixeln) ausgebildeten IR-Detektor 11 und fünf IR-Emitter 10, wobei die Leistung der IR-Emitter 10 mittels der Steuereinheit 12 jeweils separat steuerbar ist. Den IR-Emittern 10 gegenüberliegend befinden sich die jeweils zugeordneten Detektionsbereiche des IR-Detektors 11; der jeweilige Messpfad wird vom jeweiligen IR-Emitter 10 und dem diesem IR-Emitter 10 zugeordneten Detektionsbereich des IR-Detektors 11 gebildet. Die Elektrolytlösung 3 wird durch die zwischen den IR-Emittern 10 und dem IR-Detektor 11 angeordnete Durchflusszelle 2 hindurchgeleitet. In den Ausführungsbeispielen ist das IR-Spektrometer 1 jeweils ein Transmissionsspektrometer.

Im Ausführungsbeispiel nach Fig. 3 ist der IR-Detektor 11 mit dem linear variablen Filter 13 (LVF), auch Filterkeil bezeichnet, versehen. Dieser bewirkt, dass jedes Pixel des als Zeilendetektor ausgebildeten IR-Detektors 11 für eine andere Wellenlänge der MIR-Strahlung sensibel ist. Die Pixelabschnitte, die dem jeweiligen IR-Emitter 10 gegenüberliegen, bilden demnach die Detektionsbereiche im jeweiligen Messpfad. Die IR-Emitter 10 werden hinsichtlich ihrer Leistung so gesteuert, dass der IR-Detektor 11 im jeweiligen Messpfad optimal ausgeleuchtet ist. Die IR-Emitter 10 im Ausführungsbeispiel nach Fig. 3 emittieren mit gleicher Emissionswellenlänge, d. h., sie sind zum Beispiel baugleich.

Im Ausführungsbeispiel nach Fig. 4 sind die IR-Emitter 10 jeweils MIR-LEDs, die MIR-Strahlung mit unterschiedlicher Emissionswellenlänge emittieren. D. h., der dem jeweiligen IR-Emitter 10 gegenüberliegende Detektionsbereich des (filterfreien) IR-Detektors 11 wird mithin mit MIR-Strahlung unterschiedlicher Wellenlänge angestrahlt. Die IR-Emitter 10 sind wiederum in ihrer Leistung mittels der Steuereinheit 12 separat steuerbar. Die Abschirmelemente 14 verhindern Streustrahlung zwischen den einzelnen Messpfaden.

Durch die detektionsbereichsspezifisch unterschiedlich gesteuerte Leistung kann das erfasste Infrarotspektrum so angepasst werden, dass die für die Konzentrationsbestimmung sensiblen Wellenzahlintervalle besser aufgelöst werden, ohne gleichzeitig andere Wellenlängenbereiche zu überstrahlen.

### Bezugszeichenliste

- 1: IR-Spektrometer
- 2: Durchflusszelle
- 3: Elektrolytlösung
- 4: Vorlagebehälter
- 5: Leitung
- 6: Dosiereinrichtung
- 7: Batteriekörper
- 10: IR-Emitter
- 11: IR-Detektor
- 12: Steuereinheit
- 13: Linear variabler Filter (LVF)
- 14: Abschirmelement
- 30: Infrarotspektrum einer abfüllfertigen Li-Ionen-Elektrolytlösung aus einem Li-Ionen-Elektrolyt und dem Lösungsmittel Dimethylcarbonat
- 31: Referenzinfrarotspektrum einer definierten Testmischung aus einem Li-lonen-Elektrolyt und dem Lösungsmittel Dimethylcarbonat
- 32: Referenzinfrarotspektrum des Lösungsmittels Dimethylcarbonat
- A: Absorbanz
- ṽ: Wellenzahl

## Patentansprüche

1. Messvorrichtung zur Inline-Überwachung einer Elektrolytlösung (3),
umfassend:
- eine Durchflusszelle (2) zur Durchleitung der Elektrolytlösung (3),
- ein an die Durchflusszelle (2) gekoppeltes, mit der Elektrolytlösung (3) interagierendes IR-Spektrometer (1) zur spektroskopischen Analyse der Elektrolytlösung (3),
wobei das IR-Spektrometer (1) aufweist:
- mehrere IR-Emitter (10),
- mindestens einen IR-Detektor (11) mit mehreren Detektionsbereichen,
- eine Steuereinheit (12) zur Einzelleistungssteuerung der IR-Emitter (10),
wobei:
- jedem der IR-Emitter (10) ein separater Detektionsbereich des IR-Detektors (11) zugeordnet ist, wobei jeder der IR-Emitter (10) und der ihm zugeordnete Detektionsbereich des IR-Detektors (11) jeweils einen Messpfad des IR-Spektrometers (1) bilden,
- der mindestens eine IR-Detektor (11) ausgebildet ist, für jeden Messpfad MIR-Strahlung in einem detektionsbereichsspezifischen Wellenzahlintervall zu detektieren, wobei sich die detektionsbereichsspezifischen Wellenzahlintervalle der unterschiedlichen Messpfade voneinander unterscheiden,
- die Leistung jedes IR-Emitters (10) mittels der Steuereinheit (12) in Abhängigkeit des dem jeweiligen Messpfad zugeordneten detektionsbereichsspezifischen Wellenzahlintervalls zur Anpassung der Strahlungsintensität im jeweiligen Messpfad individuell steuerbar und/oder modulierbar ist, und
- die Steuereinheit (12) eingerichtet ist, die Leistung des jeweiligen IR-Emitters (10) so zu steuern, dass die Strahlungsintensität im jeweiligen Messpfad in einem Intensitätsarbeitsbereich liegt, der oberhalb des Signalrauschpegels und unterhalb des Sättigungslimits des IR-Detektors (11) im jeweiligen detektionsbereichsspezifischen Wellenzahlintervall liegt,
**dadurch gekennzeichnet, dass**
a) die IR-Emitter (10) MIR-Strahlung in unterschiedlichen emitterspezifischen Wellenzahlintervallen emittieren, wobei für jeden Messpfad das emitterspezifische Wellenzahlintervall jeweils mit dem detektionsbereichsspezifischen Wellenzahlintervall korrespondiert, und dass die einzelnen Messpfade des IR-Spektrometers (1) durch ein oder mehrere Abschirmelemente (14) optisch voneinander getrennt sind,
oder
b) der IR-Detektor (11) mit einem oder mehreren spektralselektiven Filterelementen ausgestattet ist, wobei das oder die Filterelemente so ausgebildet sind, dass der IR-Detektor (11) für jeden Messpfad die MIR-Strahlung ausschließlich in dem diesem Messpfad zugeordneten detektionsbereichsspezifischen Wellenzahlintervall detektiert.

2. Messvorrichtung nach Anspruch 1, Alternative a), **dadurch gekennzeichnet, dass** der oder mindestens einer der IR-Detektoren (11) als pyroelektrischer Zeilendetektor ausgebildet ist, wobei einem der Messpfade einer der Detektionsbereiche des als pyroelektrischer Zeilendetektor ausgebildeten IR-Detektors (11) zugeordnet ist, dessen detektionsbereichsspezifisches Wellenzahlintervall im Bereich von 4000 cm⁻¹ bis 2000 cm⁻¹ liegt, und wobei einem weiteren der Messpfade einer der Detektionsbereiche des als pyroelektrischer Zeilendetektor ausgebildeten IR-Detektors (11) zugeordnet ist, dessen detektionsbereichsspezifisches Wellenzahlintervall im Bereich von 1800 cm⁻¹ bis 900 cm⁻¹ liegt.

3. Messvorrichtung nach Anspruch 1, Alternative a), oder Anspruch 2, **dadurch gekennzeichnet, dass** das IR-Spektrometer (1) mehrere der IR-Detektoren (11) aufweist, wobei einer der IR-Detektoren (11) ein diskreter Sensor ist, dessen detektionsbereichsspezifisches Wellenzahlintervall im zugeordneten Messpfad bei 850 cm⁻¹ ± 25 cm⁻¹ liegt.

4. Messvorrichtung nach Anspruch 1, Alternative a), nach Anspruch 2 oder nach Anspruch 3, **dadurch gekennzeichnet, dass** die IR-Emitter (10) Mittelinfrarot-Leuchtdioden mit unterschiedlicher Emissionswellenlänge sind.

5. Messvorrichtung nach Anspruch 1, Alternative b), **dadurch gekennzeichnet, dass** das Filterelement ein linear variabler Filter (13) ist.

6. Messvorrichtung nach einem der Ansprüche 1 bis 5, **dadurch gekennzeichnet, dass** das IR-Spektrometer (1) als Transmissionsspektrometer ausgebildet ist, wobei die Durchflusszelle (2) eine Durchflussküvette mit einer festen oder einer variabel einstellbaren Schichtdicke ist, wobei die Durchflussküvette mindestens zwei einander gegenüberliegende IR-transparente Fenster aufweist.

7. Messvorrichtung nach Anspruch 6, **dadurch gekennzeichnet, dass** die Durchflusszelle (2) eine Durchflussküvette mit variabler Schichtdicke ist, die automatisiert mechanisch oder piezoelektrisch einstellbar ist.

8. Messvorrichtung nach einem der Ansprüche 1 bis 7, **dadurch gekennzeichnet, dass** die Messvorrichtung ferner eine Datenverarbeitungseinheit zur Verarbeitung mittels des IR-Spektrometers (1) erfasster Infrarotspektren, zur Datenspeicherung der erfassten Infrarotspektren ebenso wie von Referenzinfrarotspektren sowie zur spektralanalytischen Auswertung der mittels des IR-Spektrometers (1) erfassten Infrarotspektren aufweist.

9. Messvorrichtung nach Anspruch 8, **dadurch gekennzeichnet, dass** die Datenverarbeitungseinheit ein auf Referenzinfrarotspektren trainiertes chemometrisches Modell auf Basis eines künstlichen neuronalen Netzes zur spektralanalytischen Auswertung der mittels des IR-Spektrometers (1) erfassten Infrarotspektren umfasst.

10. Elektrolyt-Befüllungsanlage zur Befüllung von Batteriekörpern (7) mit einer Elektrolytlösung (3), **dadurch gekennzeichnet, dass** die Elektrolyt-Befüllungsanlage eine Messvorrichtung gemäß einem der Ansprüche 1 bis 9 umfasst, wobei die Messvorrichtung in eine Leitung (5) integriert ist, durch die die Elektrolytlösung (3) einer Befüllstelle zur Befüllung der Batteriekörper (7) zugeführt wird.

11. Verfahren zur Inline-Überwachung einer Elektrolytlösung (3) bei der Befüllung von Batteriekörpern (7), **dadurch gekennzeichnet, dass** das Verfahren mittels einer Elektrolyt-Befüllungsanlage nach Anspruch 10 durchgeführt wird,
wobei:
- die Elektrolytlösung (3) durch die Durchflusszelle (2) der Messvorrichtung geleitet und mittels des IR-Spektrometers (1) der Messvorrichtung spektroskopisch analysiert wird,
- in jedem der Messpfade MIR-Strahlung durch einen der IR-Emitter (10) emittiert und von dem zugeordneten Detektionsbereich des IR-Detektors (11) in dem detektionsbereichsspezifischen Wellenzahlintervall detektiert wird,
- die Leistung jedes der IR-Emitter (10) mittels der Steuereinheit (12) in Abhängigkeit des jeweiligen detektionsbereichsspezifischen Wellenzahlintervalls individuell so gesteuert wird, dass die Strahlungsintensität im jeweiligen Messpfad in einem Intensitätsarbeitsbereich liegt, der im linearen Arbeitsbereich des IR-Detektors (11) im jeweiligen detektionsbereichsspezifischen Wellenzahlintervall liegt, und
- aus einem durch das IR-Spektrometer (1) über alle Messpfade hinweg erfassten Infrarotspektrum die in der Elektrolytlösung (3) enthaltenen Stoffe sowie deren Stoffmengenkonzentration bestimmt werden, indem das erfasste Infrarotspektrum mit Referenzinfrarotspektren von Elektrolytlösungen (3) mit bekannter Zusammensetzung und bekannter Stoffmengenkonzentration verglichen wird.

12. Verfahren nach Anspruch 11, **dadurch gekennzeichnet, dass** die Elektrolytlösung (3) ein lösungsmittelhaltiger Lithium- oder Natrium-Ionen-Elektrolyt ist, und dass mittels des Vergleichs des erfassten Infrarotspektrums mit Referenzinfrarotspektren der Ionengehalt, der Lösungsmittelgehalt und/oder der Wassergehalt der Elektrolytlösung (3) bestimmt werden.

## Claims

1. Measuring device for inline monitoring of an electrolyte solution (3),
comprising:
- a flow cell (2) for passing the electrolyte solution (3) through,
- an IR spectrometer (1), coupled to the flow cell (2) and interacting with the electrolyte solution (3), for spectroscopic analysis of the electrolyte solution (3),
wherein the IR spectrometer (1) comprises:
- a plurality of IR emitters (10),
- at least one IR detector (11) having a plurality of detection regions,
- a control unit (12) for individual power control of the IR emitters (10),
wherein:
- each of the IR emitters (10) is assigned a separate detection region of the IR detector (11), wherein each of the IR emitters (10) and the detection region of the IR detector (11) assigned thereto each form a measurement path of the IR spectrometer (1),
- the at least one IR detector (11) is configured to detect, for each measurement path, MIR radiation in a detection-region-specific wavenumber interval, wherein the detection-region-specific wavenumber intervals of the different measurement paths differ from one another,
- the power of each IR emitter (10) can be individually controlled and/or modulated by means of the control unit (12) as a function of the detection-region-specific wavenumber interval assigned to the respective measurement path in order to adapt the radiation intensity in the respective measurement path, and
- the control unit (12) is configured to control the power of the respective IR emitter (10) such that the radiation intensity in the respective measurement path lies within an intensity operating range which is above the signal noise level and below the saturation limit of the IR detector (11) in the respective detection-region-specific wavenumber interval,
**characterised in that**
a) the IR emitters (10) emit MIR radiation in different emitter-specific wavenumber intervals, wherein, for each measurement path, the emitter-specific wavenumber interval corresponds to the associated detection-region-specific wavenumber interval, and the individual measurement paths of the IR spectrometer (1) are optically separated from one another by one or more shielding elements (14),
or
b) the IR detector (11) is equipped with one or more spectrally selective filter elements, wherein the filter element or elements are configured such that, for each measurement path, the IR detector (11) detects the MIR radiation exclusively in the detection-region-specific wavenumber interval assigned to this measurement path.

2. Measuring device according to claim 1, alternative a), **characterised in that** the IR detector, or at least one of the IR detectors (11), is configured as a pyroelectric line detector, wherein one of the detection regions of the IR detector (11) configured as a pyroelectric line detector is assigned to one of the measurement paths, the detection-region-specific wavenumber interval of said detection region lying in the range from 4000 cm⁻¹ to 2000 cm⁻¹, and wherein one of the detection regions of the IR detector (11) configured as a pyroelectric line detector is assigned to a further one of the measurement paths, the detection-region-specific wavenumber interval of said detection region lying in the range from 1800 cm⁻¹ to 900 cm⁻¹.

3. Measuring device according to claim 1, alternative a), or claim 2, **characterised in that** the IR spectrometer (1) has a plurality of the IR detectors (11), wherein one of the IR detectors (11) is a discrete sensor, the detection-region-specific wavenumber interval of which is 850 cm⁻¹ ± 25 cm⁻¹ in the measurement path assigned thereto.

4. Measuring device according to claim 1, alternative a), claim 2 or claim 3,
**characterised in that** the IR emitters (10) are mid-infrared light-emitting diodes having different emission wavelengths.

5. Measuring device according to claim 1, alternative b), **characterised in that** the filter element is a linear variable filter (13).

6. Measuring device according to any one of claims 1 to 5, **characterised in that** the IR spectrometer (1) is configured as a transmission spectrometer, wherein the flow cell (2) is a flow-through cuvette having a fixed or variably adjustable layer thickness, wherein the flow-through cuvette has at least two mutually opposite IR-transparent windows.

7. Measuring device according to claim 6, **characterised in that** the flow cell (2) is a flow-through cuvette having a variable layer thickness which is mechanically or piezoelectrically adjustable in an automated manner.

8. Measuring device according to any one of claims 1 to 7, **characterised in that** the measuring device further comprises a data processing unit for processing infrared spectra acquired by means of the IR spectrometer (1), for storing the acquired infrared spectra as well as reference infrared spectra, and for spectroanalytical evaluation of the infrared spectra acquired by means of the IR spectrometer (1).

9. Measuring device according to claim 8, **characterised in that** the data processing unit comprises a chemometric model based on an artificial neural network and trained on reference infrared spectra for spectroanalytical evaluation of the infrared spectra acquired by means of the IR spectrometer (1).

10. Electrolyte filling system for filling battery bodies (7) with an electrolyte solution (3), **characterised in that** the electrolyte filling system comprises a measuring device according to any one of claims 1 to 9,
wherein the measuring device is integrated into a line (5) through which the electrolyte solution (3) is supplied to a filling station for filling the battery bodies (7).

11. Method for inline monitoring of an electrolyte solution (3) during the filling of battery bodies (7), **characterised in that** the method is carried out by means of an electrolyte filling system according to claim 10,
wherein:
- the electrolyte solution (3) is passed through the flow cell (2) of the measuring device and spectroscopically analysed by means of the IR spectrometer (1) of the measuring device,
- in each of the measurement paths, MIR radiation is emitted by one of the IR emitters (10) and detected by the assigned detection region of the IR detector (11) in the detection-region-specific wavenumber interval,
- the power of each of the IR emitters (10) is individually controlled by means of the control unit (12) as a function of the respective detection-region-specific wavenumber interval such that the radiation intensity in the respective measurement path lies within an intensity operating range which lies within the linear operating range of the IR detector (11) in the respective detection-region-specific wavenumber interval, and
- the substances contained in the electrolyte solution (3) and their amount-of-substance concentration are determined from an infrared spectrum acquired by the IR spectrometer (1) across all measurement paths by comparing the acquired infrared spectrum with reference infrared spectra of electrolyte solutions (3) having a known composition and a known amount-of-substance concentration.

12. Method according to claim 11, **characterised in that** the electrolyte solution (3) is a solvent-containing lithium-ion or sodium-ion electrolyte, and **in that** the ion content, the solvent content and/or the water content of the electrolyte solution (3) are determined by comparing the acquired infrared spectrum with reference infrared spectra.

## Revendications

1. Dispositif de mesure pour la surveillance en ligne d'une solution électrolytique (3), comprenant :
- une cellule d'écoulement (2) pour le passage de la solution électrolytique (3),
- un spectromètre IR (1), couplé à la cellule d'écoulement (2) et interagissant avec la solution électrolytique (3), pour l'analyse spectroscopique de la solution électrolytique (3),
dans lequel le spectromètre IR (1) présente :
- plusieurs émetteurs IR (10),
- au moins un détecteur IR (11) avec plusieurs zones de détection,
- une unité de commande (12) pour la commande individuelle de la puissance des émetteurs IR (10), dans lequel :
- une zone de détection distincte du détecteur IR (11) est affectée à chacun des émetteurs IR (10), chacun des émetteurs IR (10) et la zone de détection du détecteur IR (11) qui lui est affectée formant respectivement un trajet de mesure du spectromètre IR (1),
- l'au moins un détecteur IR (11) est conçu pour détecter un rayonnement MIR pour chaque trajet de mesure dans un intervalle de nombres d'onde spécifique à la zone de détection, les intervalles de nombres d'onde spécifiques aux zones de détection des différents trajets de mesure étant différents les uns des autres,
- la puissance de chaque émetteur IR (10) peut être commandée et/ou modulée individuellement au moyen de l'unité de commande (12) en fonction de l'intervalle de nombres d'onde spécifique à la zone de détection affecté au trajet de mesure respectif afin d'adapter l'intensité du rayonnement dans le trajet de mesure respectif, et
- l'unité de commande (12) est conçue pour commander la puissance de l'émetteur IR (10) respectif de sorte que l'intensité du rayonnement dans le trajet de mesure respectif se situe dans une plage de fonctionnement d'intensité supérieure au niveau de bruit du signal et inférieure à la limite de saturation du détecteur IR (11) dans l'intervalle de nombres d'onde respectif spécifique à la zone de détection,
**caractérisé en ce que**
a) les émetteurs IR (10) émettent un rayonnement MIR dans des intervalles de nombres d'onde spécifiques à l'émetteur différents, l'intervalle de nombres d'onde spécifique à l'émetteur correspondant, pour chaque trajet de mesure,
à l'intervalle de nombres d'onde spécifique à la zone de détection, et les différents trajets de mesure du spectromètre IR (1) sont séparés optiquement les uns des autres par un ou plusieurs éléments de blindage (14), ou
b) le détecteur IR (11) est équipé d'un ou de plusieurs éléments filtrants à sélectivité spectrale, le ou les éléments filtrants étant conçus de sorte que, pour chaque trajet de mesure, le détecteur IR (11) détecte le rayonnement MIR uniquement dans l'intervalle de nombres d'onde spécifique à la zone de détection affecté à ce trajet de mesure.

2. Dispositif de mesure selon la revendication 1, alternative a), **caractérisé en ce que** le ou au moins l'un des détecteurs IR (11) est réalisé sous forme de détecteur linéaire pyroélectrique, dans lequel est affectée à l'un des trajets de mesure l'une des zones de détection du détecteur IR (11) réalisé sous forme de détecteur linéaire pyroélectrique, dont l'intervalle de nombres d'onde spécifique à la zone de détection est compris dans la plage de 4000 cm⁻¹ à 2000 cm⁻¹, et dans lequel est affectée à un autre des trajets de mesure l'une des zones de détection du détecteur IR (11) réalisé sous forme de détecteur linéaire pyroélectrique, dont l'intervalle de nombres d'onde spécifique à la zone de détection est compris dans la plage de 1800 cm⁻¹ à 900 cm⁻¹.

3. Dispositif de mesure selon la revendication 1, alternative a), ou la revendication 2, **caractérisé en ce que** le spectromètre IR (1) présente plusieurs des détecteurs IR (11), l'un des détecteurs IR (11) étant un capteur discret dont l'intervalle de nombres d'onde spécifique à la zone de détection dans le trajet de mesure affecté est de 850 cm⁻¹ ± 25 cm⁻¹.

4. Dispositif de mesure selon la revendication 1, alternative a), selon la revendication 2 ou selon la revendication 3, **caractérisé en ce que** les émetteurs IR (10) sont des diodes électroluminescentes dans l'infrarouge moyen présentant des longueurs d'onde d'émission différentes.

5. Dispositif de mesure selon la revendication 1, alternative b), **caractérisé en ce que** l'élément filtrant est un filtre linéairement variable (13).

6. Dispositif de mesure selon l'une quelconque des revendications 1 à 5, **caractérisé en ce que** le spectromètre IR (1) est réalisé sous forme de spectromètre en transmission, dans lequel la cellule d'écoulement (2) est une cuvette à circulation présentant une épaisseur de couche fixe ou réglable de manière variable, la cuvette à circulation présentant au moins deux fenêtres transparentes aux IR opposées l'une à l'autre.

7. Dispositif de mesure selon la revendication 6, **caractérisé en ce que** la cellule d'écoulement (2) est une cuvette à circulation présentant une épaisseur de couche variable, qui peut être réglée automatiquement de manière mécanique ou piézoélectrique.

8. Dispositif de mesure selon l'une quelconque des revendications 1 à 7,
**caractérisé en ce que** ledit dispositif de mesure présente en outre une unité de traitement des données destinée au traitement des spectres infrarouges détectés au moyen du spectromètre IR (1), au stockage des données des spectres infrarouges détectés ainsi que de spectres infrarouges de référence, ainsi qu'à l'évaluation par analyse spectrale des spectres infrarouges détectés au moyen du spectromètre IR (1).

9. Dispositif de mesure selon la revendication 8, **caractérisé en ce que** l'unité de traitement des données comprend un modèle chimiométrique entraîné sur des spectres infrarouges de référence sur la base d'un réseau neuronal artificiel pour l'évaluation par analyse spectrale des spectres infrarouges détectés au moyen du spectromètre IR (1).

10. Installation de remplissage d'électrolyte destinée au remplissage de corps de batterie (7) avec une solution électrolytique (3), **caractérisée en ce que** ladite installation de remplissage d'électrolyte comprend un dispositif de mesure conformément à l'une quelconque des revendications 1 à 9, le dispositif de mesure étant intégré dans une conduite (5) par laquelle la solution électrolytique (3) est amenée à un point de remplissage pour le remplissage des corps de batterie (7).

11. Procédé de surveillance en ligne d'une solution électrolytique (3) lors du remplissage de corps de batterie (7), **caractérisé en ce que** ledit procédé est mis en œuvre au moyen d'une installation de remplissage d'électrolyte selon la revendication 10, dans lequel :
- la solution électrolytique (3) est conduite à travers la cellule d'écoulement (2) du dispositif de mesure et analysée par spectroscopie au moyen du spectromètre IR (1) du dispositif de mesure,
- dans chacun des trajets de mesure, un rayonnement MIR est émis par l'un des émetteurs IR (10) et détecté par la zone de détection affectée du détecteur IR (11), dans l'intervalle de nombres d'onde spécifique à la zone de détection,
- la puissance de chacun des émetteurs IR (10) est commandée individuellement au moyen de l'unité de commande (12) en fonction de l'intervalle de nombres d'onde respectif spécifique à la zone de détection, de sorte que l'intensité du rayonnement dans le trajet de mesure respectif se situe dans une plage de fonctionnement d'intensité comprise dans la plage de fonctionnement linéaire du détecteur IR (11) dans l'intervalle de nombres d'onde respectif spécifique à la zone de détection, et
- à partir d'un spectre infrarouge détecté par le spectromètre IR (1) sur tous les trajets de mesure, les substances contenues dans la solution électrolytique (3) ainsi que leur concentration en quantité de matière sont déterminées en comparant le spectre infrarouge détecté avec des spectres infrarouges de référence de solutions électrolytiques (3) de composition connue et de concentration en quantité de matière connue.

12. Procédé selon la revendication 11, **caractérisé en ce que** la solution électrolytique (3) est un électrolyte lithium-ion ou sodium-ion contenant un solvant et **en ce que** la teneur en ions, la teneur en solvant et/ou la teneur en eau de la solution électrolytique (3) sont déterminées en comparant le spectre infrarouge détecté avec des spectres infrarouges de référence.
